# EUROPEAN PATENT SPECIFICATION

(11) **EP 3 961 048 B1**
(45) Date of publication and mention of the grant of the patent: **20.12.2023**
(21) Application number: 21192668.8
(22) Date of filing: 23.08.2021
(51) Int. Cl.: F16B 7/04, B60P 7/15, F16B 7/10

(54) **APPARATUS FOR COUPLING A BEAM TO A RAIL**
VORRICHTUNG ZUR KOPPLUNG EINES TRÄGERS AN EINER SCHIENE
APPAREIL DE COUPLAGE D'UN FAISCEAU À UN RAIL

(30) Priority: 26.08.2020 GB 202013368
(43) Date of publication of application: 02.03.2022
(73) Proprietor: Loadlok Manufacturing Limited, Hirwaun CF44 9UP (GB)
(72) Inventor: STREET, Henry, Hirwaun, CF44 9UP (GB); JONES, Richard, Hirwaun, CF44 9UP (GB)
(74) Representative: Abel & Imray LLP

(56) References cited:
- EP-A1- 3 266 651
- DE-B4-102015 119 317
- GB-A- 2 308 564
- US-A- 6 062 780

## Description

### Field of the Invention

The present invention concerns an apparatus for coupling a beam to a rail along which the apparatus can move. The invention also concerns an assembly including the apparatus and a method of manufacturing an apparatus for coupling a beam to a rail along which the apparatus can move.

### Background of the Invention

Many industries require transportation of goods and other materials from one location to another. For example, raw materials may be transported from a supplier to a parts manufacturer who then transport manufactured goods to wholesalers and/or retailers.

Such transportation may be by road, rail, sea or air. For example, in the case of road transportation, goods (or other materials) may be transported by a vehicle such as a lorry or van that has a storage space (referred to hereinafter as a container) mounted to or supported on the chassis of the vehicle. Transportation of the goods constitutes a cost that must be borne by the entity transporting the goods. The cost includes, among others, the cost of paying the driver and the cost of fuel. To minimise these costs (among others) it is preferable to maximise use of the space available within containers.

One approach to maximising use of space is to provide adjustable horizontal beams within the container. The height of the beams with respect to the floor or deck of the container can be adjusted according to the size of the goods being transported to divide the vertical internal dimension of the container into two or more spaces. This enables goods to be stacked without loading goods directly on top of other goods. Use of such beams increases the potential for maximising use of the space but also adds weight to the vehicle. The beams must be strong enough to support the heaviest goods they will support; this may be, for example, up to 1000 kg, and so the beams are typically constructed from metal.

The beams may comprise a box-section beam coupled to anchors at each end that are constructed from thick metal plates. The additional weight of the beams and anchors results in a decrease in fuel efficiency of the vehicle (and accordingly an increase in fuel costs) and a decrease in the maximum weight of goods that can be transported by the vehicle.

US6062780A discloses an adjustable lockable decking system for use in supporting freight in a cargo vessel comprising elongated strips (tracks) configured to be mounted vertically on opposing walls of a cargo vessel.

GB2308564A discloses a box-section girder which is suitable for a crane jib or as a telescopic jib.

EP 3266651A1 discloses an apparatus for securing cargo in a vessel comprising a beam with first and second ends, the respective ends having a latching element which can be locked in complementary locking elements inside the vessel.

DE 102015119317 discloses a beam for cargo units arranged to engage with and move along a rail, the beam having a main body and an elongate arm, the elongate arm having a head portion which is pivotable and having a protrusion (the sliding shoe) which is arranged to engage with the rail such that the head portion is able to slide along the length of the rail.

The present invention seeks to avoid or mitigate the above-mentioned problems.

### Summary of the Invention

In a first aspect, the present invention provides an apparatus for coupling a beam to a rail along which the apparatus can move, the apparatus comprising: an arm assembly having a first end arranged to interface with a said beam and a second end opposite the first end; and a head assembly, rotatably coupled to the second end of the arm assembly, arranged to engage said rail to inhibit movement of the head portion along the rail, wherein the arm assembly comprises a first part and a second part, the first part and the second part being coupled together to form a box section, the first part and second part being identical in profile and arranged in opposite orientation to enable the first and second parts to be coupled together.

Such an apparatus provides a lighter structure for supporting or securing a load in a vehicle, for example inside a container mounted on a lorry, van or other vehicles such as aircraft or ships. For example, with respect to existing apparatus, the weight of the apparatus may be reduced, reducing the cost of transporting goods by reducing fuel costs and/or increasing the amount of goods that can be transported (by using the saved weight to carry those goods), while maintaining or even increasing the strength of the apparatus. In particular, the geometry of the arm assembly enables the arm assembly to be fabricated from thin sheet metal material, such as sheet steel, which provides for an arm assembly that is lighter and stronger overall. This provides an arm assembly that with an increased tensile strength and a slimmer profile than existing arm assemblies. Compared to existing apparatus, the apparatus can achieve a weight saving of approximately 1 kg per apparatus (i.e. approximately 2 kg per beam). Since multiple beams (sometimes several tens of beams) are installed within a single container this results in a significant weight reduction, with corresponding benefits in fuel economy and/or additional weight available for transporting goods, reducing the cost of transporting goods. Furthermore, since less material is used, there is additional cost saving in raw materials.

In some embodiments, the first part and the second part are coupled together by one or more mechanical fasteners, such as rivets, nuts and bolt and/or screws. However, in other embodiments, the first part and the second part are coupled together by a weld joint, a solder joint and/or an adhesive joint.

The first part and the second part may each comprise a metal material, such as steel, stainless steel or aluminium. For example, the metal material may be a folded metal or extruded metal.

The first part and the second part are identical in profile. The first part and the second part are arranged in opposite orientation to enable coupling. The first and second part may comprise overlapping portions to facilitate coupling together. This simplifies manufacture of the parts since only one type of part needs to be manufactured and that single type of part is compatible with any other similar part (e.g. rather than having left- and right- handed parts).

The box section is preferably sized in order to allow easy but secure insertion into a said beam.

Preferably, the box section comprises an engagement element arranged to allow adjustable and secure engagement with a said beam. For example, the engagement element may comprise an aperture or slot in at least one wall of the box section, through which a mechanical fastener may secure the box section to a corresponding element on the said beam. The mechanical fastener may be a form pin, a nut and bolt or a self-drilling screw, for example.

In some embodiments, the head assembly comprises a body portion and a trigger mechanism housed within the body portion. The trigger mechanism may comprise: an actuator for operating the trigger mechanism; a protrusion for engaging a receiver in a said rail; a pivot pin for attaching the trigger mechanism to the body portion; and a spring, wherein the trigger mechanism is rotatable about the pivot pin and, in use, the spring urges against the trigger mechanism to engage the protrusion with a said receiver.

The spring may be a double torsion spring, which advantageously applies a balanced force to the trigger in use so that it extends and retracts in line with the box section of the arm assembly.

The body portion may also be formed of metal, such as folded sheet steel. The body portion may have a closed end and an open end to form a U-shape. The thickness of the steel is in the range from 1mm to 3mm, or 1mm to 2mm. The thickness of the steel may be approximately 2 mm.

In some embodiments, the head assembly comprises a stiffening sleeve located within the body portion at or near the open end. The stiffening sleeve provides structural support to the body portion increasing its mechanical strength (e.g. preventing buckling of the relatively thin and lightweight structure of the body portion from buckling under load). In use, the stiffening sleeve also provides a bearing surface to help the head assembly to glide along a rail smoothly and freely.

The trigger mechanism may be arranged to engage the stiffening sleeve when under tension from the spring. This prevents over-extension of the trigger mechanism.

In some embodiments, the stiffening sleeve is fixed to the body portion by a bolt that passes through the body portion and the stiffening sleeve to be secured with a locking nut.

In some embodiments, the head assembly is connected to the arm assembly by the pivot pin such that both the head assembly and the trigger mechanism are rotatable about the same axis of rotation. The pivot pin may again is secured with a locking nut.

In some embodiments, the apparatus comprises a pair of bushes. A first of the pair of bushes is located between a first outside surface of the head assembly and a first inside surface of the arm assembly and a second of the pair of bushes is located between a second outside surface of the head assembly, opposite the first inside surface, and a second inside surface of the arm assembly, opposite the first outside surface, such that the head assembly is centred within the arm assembly. The bushes help to centre the head assembly with respect to the arm assembly (in a horizontal direction). The bushes also act as a bearing to reduce friction between the arm assembly and the head assembly, thereby enabling the head assembly to rotate with respect to the arm assembly smoothly around a central axis of the bolt.

In a second aspect, the present invention provides an assembly for securing a load on a deck, the assembly comprising a beam having a first end and a second end opposite the first end, wherein each of the first and second ends of the beam is arranged to receive an apparatus according to any preceding claim.

In some embodiments, the beam is tubular and the first and second arm assemblies are arranged to be inserted into the beam via the respective first and second ends. The first and second arm assemblies are fixed to the beam with a pin, screw or bolt, for example.

In a third aspect, the present invention provides a method of manufacturing an apparatus for coupling a beam to a rail along which the apparatus can move, the apparatus comprising a head assembly and an arm assembly, the method comprising: performing a first sheet bending process to form a body portion of the head assembly; performing a second sheet bending process to form a first part and second part of the arm assembly, the first and second parts being identical in profile, arranging the first part and second part in opposite orientations and fixing the two side portions together; providing a trigger mechanism within the body portion of the head assembly; and inserting a pivot pin through the body portion, the trigger mechanism and the first and second parts of the arm assembly, thereby joining the head assembly to the arm assembly.

The third aspect provides the advantages described above with reference to the first and second aspects.

In some embodiments, the method comprises riveting the two folded sides of the arm assembly together.

In some embodiments, the method comprises providing a stiffening sleeve within the body portion of the head assembly; and inserting a bolt through the body portion and the stiffening sleeve and fixing the bolt with a locking nut.

It will of course be appreciated that features described in relation to one aspect of the present invention may be incorporated into other aspects of the present invention within the scope of the appended claims. For example, the method of the invention may incorporate any of the features described with reference to the apparatus of the invention and *vice versa* within the scope of the appended claims.

### Description of the Drawings

Embodiments of the present invention will now be described by way of example only with reference to the accompanying schematic drawings of which:
Figure 1a shows an exploded view of an apparatus according to an embodiment;
Figure 1b shows a side view of an apparatus according to an embodiment;
Figure 2a shows an exploded view of an arm assembly;
Figure 2b is a cross-sectional view of an arm assembly;
Figure 3 shows an exploded view of a head assembly;
Figure 4 shows a side view of an assembly according to an embodiment;
Figure 5 shows a rail along which an apparatus according to an embodiment may move; and
Figure 6 is a flow diagram showing a method of manufacturing an apparatus according to an embodiment.

### Detailed Description

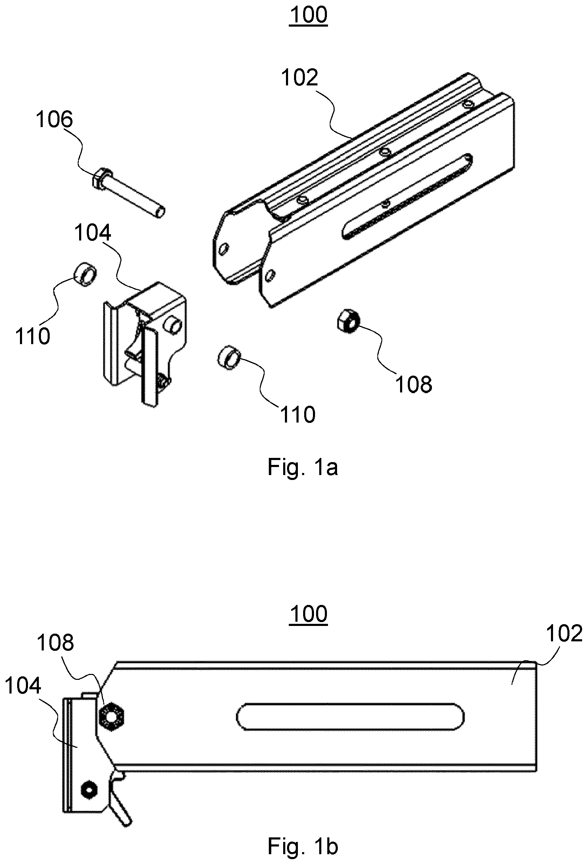

Figures 1a and 1b show an apparatus 100 according to an embodiment. The apparatus 100 is for coupling a beam, such as the beams described above, to a rail along which the apparatus 100 can move. For example, the rail may be located on an interior wall of a vehicle container oriented to run vertically on the wall and the apparatus 100 may be arranged to move vertically along the rail.

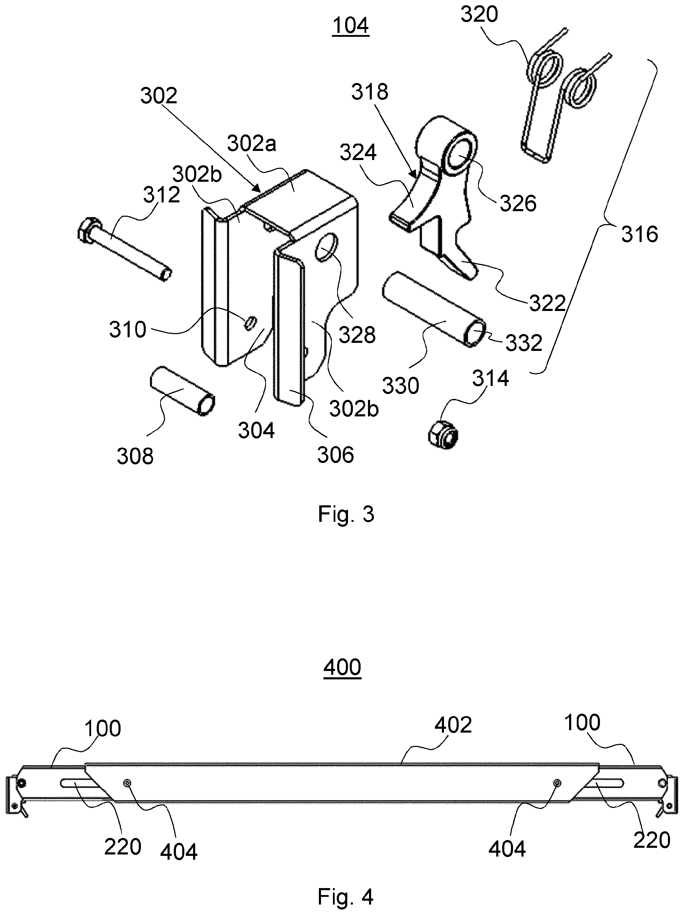

The apparatus 100 forms part of an assembly (described below with reference to Figure 4) that may be installed into a vehicle to support goods being transported in the vehicle. For example, the vehicle may be a truck or lorry used to transport goods by road. Vehicles used to transport goods typically have a storage compartment. In the example of a lorry, the storage compartment may be fixed to a rearward portion of the lorry's chassis or may be fixed to a trailer that may be connected to a tractor unit. In other examples, the storage compartment may be a container unit (of the type commonly used to transport goods by sea) that can be loaded onto the lorry or lorry trailer. The term container is used herein to refer to any of these possibilities.

The apparatus 100 comprises an arm assembly 102 and a head assembly 104. The head assembly 104 is rotatably joined to the arm assembly 102 by a bolt 106 and a nut 108, as described in more detail below. Bushes 110 are located on either side of the head assembly 104. The bushes 110 help to centre the head assembly 104 with respect to the arm assembly 102 (in a horizontal direction). The bushes 110 also act as a bearing to reduce friction between the arm assembly 102 and the head assembly 104, thereby enabling the head assembly 104 to rotate with respect to the arm assembly 102 smoothly around a central axis of the bolt 106. The nut 108 and bolt 106 may have any suitable diameter and thread but in a preferred embodiment they are M8.

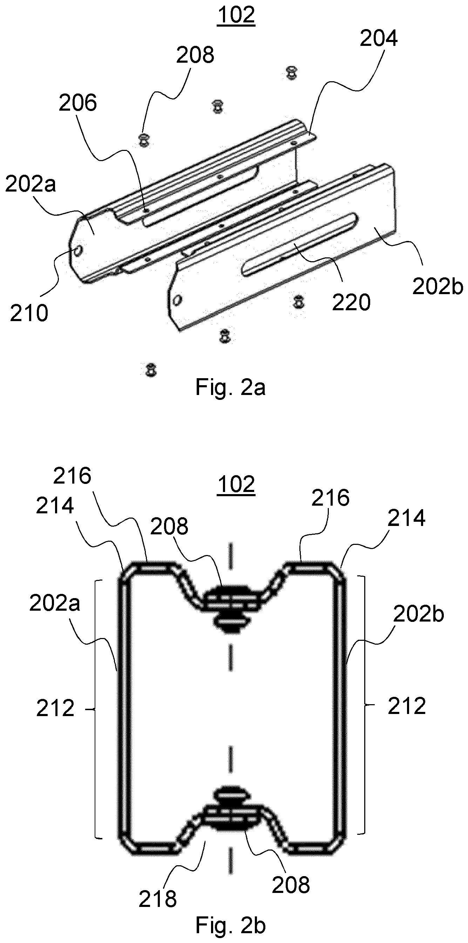

Figures 2a and 2b show the arm assembly 102 in more detail. The arm assembly 102 is formed of two parts, a first part 202a and a second part 202b (referred to hereinafter as side panels 202a, 202b). The side panels 202a, 202b may be formed of a metal material such as steel or aluminium.

The side panels 202a, 202b may be formed from a sheet metal material that is formed into the side panels 202a, 202b by a sheet bending or folding process by which sheet metal is bent over a so-called "form". The metal material may be sheet steel, sheet stainless steel, or sheet aluminium. In other examples, the side panels 202a, 202b may be formed by extruding metal material though a die.

In this embodiment, the two side panels 202a, 202b are identical in form and one of the side panels 202a, 202b is flipped (i.e. rotated through 180°) about its longitudinal axis so that it appears as a mirror image of the other side panel 202a, 202b.

At the top and bottom edges of each of the side panels 202a, 202b are flanges 204. Holes 206 are provided in the flanges 204 to allow for the side panels 202a, 202b to be coupled or joined together to form a box section when the flanges 204 are overlapped, as shown in Figure 2b (e.g. an offset joggled flange). The box section is sized in order to allow easy but secure insertion into a beam, as described below with reference to Figure 4.

The holes 206 may be drilled or may be punched in the flanges 204 during a sheet bending process.

At one end of each side panel is an aperture or hole 210, which is used to connect the head assembly 104 to the arm assembly 102, as described below with reference to Figure 4.

In the embodiment shown in Figure 2b, the side panels 202a, 202b are coupled or joined together at their respective flanges 204 with mechanical fasteners. In the example shown in Figures 2a and 2b the side panels 202a, 202b are joined together with rivets 208. For example, the rivets 208 may be any suitable diameter but in a preferred example, the rivets are 4.8mm in diameter.

In other examples, the side panels 202a, 202b may be joined with other fasteners such as screws or nuts and bolts. In other examples, the side panels 202a, 202b may be joined together by a weld joint, a solder joint or an adhesive joint.

In the embodiment shown in Figures 2a and 2b, the side panels 202a 202b are formed by a sheet bending process. As shown in Figure 2b, the side panels 202a, 202b each comprise a sidewall 212 that, in use, extends vertically. At the ends of each sidewall 212 is a bend 214 of approximately 90° to horizontal (top and bottom) walls 216. At the ends of the top and bottom walls 216 are a further series of bends leading to the flange 204. Once the flanges 204 are joined, the further series of bends forms a recess 218 in the top and bottom of the box section of the arm assembly 102. Accordingly, the rivet 208 (or other mechanical fastener) is seated within the external dimensions of the box section so as to not interfere with the internal dimensions of a beam into which the arm assembly 102 is to be installed. This arrangement is quite different from existing arm assemblies, which are typically formed from extruded box section steel or aluminium, The additional bends forming the recess 218 provide a geometry that is stronger (e.g. more rigid) than a straightforward box-section, thereby enabling the arm assembly 102 to be manufactured from thinner and, therefore, lighter material. In particular, in contrast to existing arm assemblies, the geometry of the arm assembly 102 shown in Figures 2a and 2b, and the symmetry of the two side panels 202a, 202b, enable the arm assembly 102 to be fabricated from thin sheet metal material, such as sheet steel, which provides for an arm assembly that is lighter and stronger overall. This provides an arm assembly that with an increased tensile strength and a slimmer profile than existing arm assemblies.

Furthermore, since less material is required to form the arm assembly 102, higher grade materials that are more expensive but have higher tensile strength may be used to form the arm assembly 102 without a prohibitive increase in production cost. Forming the arm assembly 102 from two parts as shown in Figures 2a and 2b therefore provides a structure that is lighter than existing conventional arm assemblies, while maintaining or improving the strength of the arm assembly. In particular, the inventors have found that, compared to existing apparatus, the apparatus 100 using the geometry described with reference to Figures 2a and 2b achieves a weight saving of approximately 1 kg per apparatus (i.e. approximately 2 kg per beam). Since multiple beams (sometimes several tens of beams) are installed within a single container this results in a significant weight reduction, with corresponding benefits in fuel economy and/or additional weight available for transporting goods, reducing the cost of transporting goods. Furthermore, since less material is used to manufacture the arm assembly 102, there is additional cost saving in raw materials used to manufacture the beam assemblies.

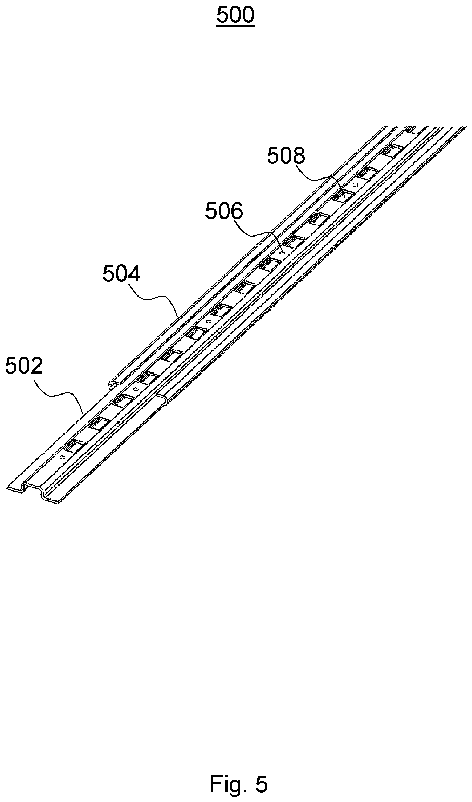

Figure 3 shows an exploded view of the head assembly 104. The head assembly 104 has a body portion 302. The body portion 302 is formed from sheet metal material similar to the arm assembly 102. The body portion 302 comprises a body top portion 302a which is joined by 90° bends in a horizontal plane to two body sidewalls 302b that extend vertically downwards (in use) to form a U-shaped body portion 302 having a cavity 304 between the body top portion 302a and the body sidewalls 302b. Further bends of slightly greater than 90°in the vertical direction at one end of each body sidewall 302b form engagement surfaces 306 which, in use, act as a bearing surface in contact with the rail (described below with reference to Figure 5). The angle of the engagement surfaces 306 being slightly greater than 90°enables the body portion 302 of the head assembly 104 to flex under load to limit the strain transmitted to other components of the head assembly 104 and arm assembly 102, and to the beam.

A stiffening sleeve 308 is located within the cavity 304 at a lower end of the cavity 304. The stiffening sleeve 308 is a generally tubular member. In the example shown in Figure 3, the stiffening sleeve 308 is circular in cross-section but in other examples the stiffening sleeve 308 may be square, rectangular, or any other suitable shape in cross-section. Located in the body sidewalls 302b at locations corresponding to a position at which the stiffening sleeve 308 is to be located are sleeve locator apertures 310. The stiffening sleeve 308 is held in position by a mechanical fastener that passes through the stiffening sleeve 308 and the sleeve locator apertures 310. In the example shown in Figure 3, the mechanical fastener is a bolt 312 that is secured with a locking nut 314, such as a nylon insert nut. The nut 314 and bolt 312 may have any suitable diameter and thread but in a preferred embodiment they are M8.

In other examples the stiffening sleeve 308 may be held in place by other suitable mechanical fasteners, or may be welded, soldered or glued in place.

The stiffening sleeve 308 provides structural support to the body sidewalls 302b increasing the mechanical strength of the body portion 302 (e.g. preventing buckling of the relatively thin and lightweight structure of the body portion 302 from buckling under load). In use, the stiffening sleeve 308 also provides a bearing surface to help the head assembly 104 to glide along the rail smoothly and freely.

The cavity 304 houses a trigger mechanism 316 that comprises a trigger 318 and a spring 320.

The trigger 318 comprises an actuator 322 located at a lower end of the trigger 318 and a protrusion 324 located at one side of the trigger 318. At an upper end of the trigger is a pivot aperture 326. In use, the actuator 322 is used to manipulate the trigger 318 about a central axis of the pivot aperture 326 to move the protrusion into engagement with a corresponding receiver in the rail (under the influence of the spring 320) and out of engagement with a corresponding receiver in the rail (against the influence of the spring 320).

Located towards the upper ends of the body sidewalls 302b are pivot sleeve receiver apertures 328. A tubular pivot sleeve 330 having a pivot sleeve aperture 332 is received in the pivot sleeve receiver apertures 328. Once assembled, the pivot sleeve 330 passes through the pivot sleeve receiver apertures 328, the pivot aperture 326 and the spring 320, such that the pivot sleeve 330 is located within the cavity 304 with the pivot sleeve aperture 332, the pivot aperture 326 and the coil of the spring 320 each being coaxial with the pivot sleeve receiver apertures 328.

In the embodiment shown in Figure 3, the spring 320 is a double torsion spring which advantageously applies a balanced force to the trigger 318 in use so that it extends and retracts in line with the box section of the arm assembly 102.

In use, the spring 320 urges the trigger 318 such that the protrusion 324 protrudes from the cavity 304 to enable engagement with a corresponding receiver in the rail (described below with reference to Figure 5). In this configuration the trigger 318 rests against the stiffening sleeve 308 preventing over-extension of the trigger mechanism 316. When the actuator 322 is pulled inwardly against the action of the spring 320, the protrusion 324 is retracted into the cavity 304 and out of engagement with the receiver in the rail, allowing the head assembly 104 to be moved (e.g. slid) along the rail.

Referring to Figures 1a and 1b, the bolt 106 connecting the head assembly 104 to the arm assembly 102 additionally passes through the pivot sleeve aperture 332, the pivot aperture 326, the coil of the spring 306, and the pivot sleeve receiver apertures 328. In other words, a single mechanical fastener (the bolt 106 in Figure 1a) acts to connect the head assembly 104 to the arm assembly 102 and acts as a pivot for the trigger mechanism 316.

Figure 4 shows an assembly 400 for securing a load on a deck according to an embodiment. The assembly 400 comprises a beam 402. The beam 402 is a box section beam with internal dimensions sized to correspond with the external dimensions of the arm assembly 102. For example, the beam may be formed of extruded aluminium. Located within each end of the beam 402 is an arm assembly 102 of the apparatus 100 described above with reference to Figure 1a to 3. The combined length of the beam 402 and the two apparatus 100 is sized to span the interior of a container. In some embodiments, the arm assembly 102 and the beam comprise a mechanism for adjusting the combined length of the assembly 400. For example, as shown in Figure 2a and in Figure 4, the arm assembly 102 may comprise a slot 220 and the beam may comprise a hole. A retaining pin 404 passing through the hole in the beam 402 and the slot 220 retains the arm assembly 102 within the interior of the beam 402. Alternatively, a slot may instead be provided in the beam 402 and the arm assembly 102 may comprise a hole, though which the retaining pin 404 is received.

The retaining pin 404 may be a form pin, for example. In other embodiments, the arm assembly 102 of the apparatus 100 may be retained within the beam 402 with a nut and bolt or a self-drilling screw.

In some embodiments, a spring mechanism may be provided in the interior of the beam 402 that is arranged to urge the arm assemblies 102 out of the interior of the beam 402. This provides a degree of tolerance with regard to the overall length of the assembly 400 to accommodate variations in the internal horizontal dimensions of the container.

The increased rigidity of the arm assembly 102 and the rotatable connection between the arm assembly and the head assembly 104 enable the weight of loads applied to the assembly 400 to be transferred approximately vertically, reducing torsional stresses being applied to the receivers of the rails when the assembly is under high load. This in turn provides for an increased lifetime of the rails. Furthermore, rotation of the head assembly 104 with respect to the arm assembly 102 enables easier installation of the assembly 400.

Figure 5 shows an example of a rail 500 that may be installed on an interior wall of a container. In the example shown in Figure 5, the rail 500 comprises an inner rail 502 and an outer rail 504. Prior to installation the inner rail 502 is able to slide within the outer rail 504 to enable the length of the rail 500 to be adjusted to suit the internal vertical dimensions of the container.

The rail 500 includes fixing apertures or holes 506 through which fixings (e.g. screws) may pass to fix the rail 500 to the interior of the container. Receivers 508 spaced apart along the rail 500 are provided to receive a protrusion 324 of the trigger mechanism 316 described above with reference to Figure 3, thereby preventing movement of the apparatus along the rail 500.

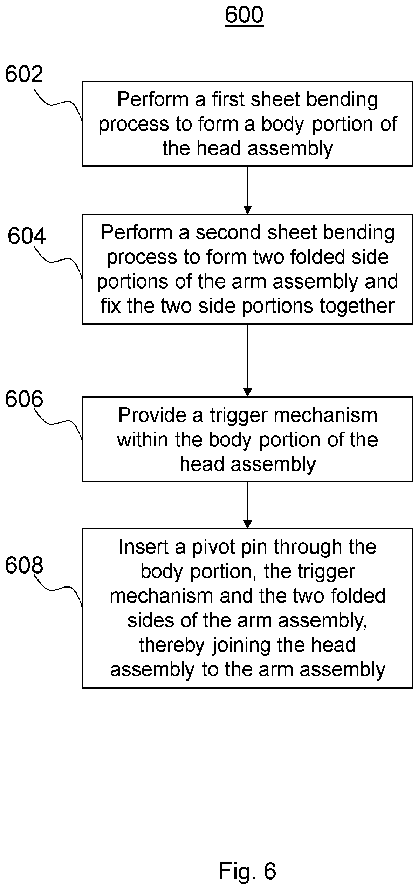

Figure 6 is a flow diagram showing a method 600 of manufacturing an apparatus for coupling a beam to a rail along which the apparatus can move, such as the apparatus 100 and rail 500 described above with reference to Figures 1a to 5.

At block 602 a first sheet bending process is performed to form a body portion (corresponding to the body portion 302) of a head assembly (corresponding to the head assembly 104).

At block 604 a second sheet bending process is performed to form two folded side portions of the arm assembly and fix the two side portions together. The second sheet bending process may be performed in the same step as the first sheet bending process performed at block 602 or may be performed as a separate process.

At block 606 a trigger mechanism (corresponding to the trigger mechanism 316) is provided within the body portion of the head assembly.

At block 608 a pivot pin (corresponding to the bolt 106) is inserted through the body portion, the trigger mechanism and the two folded sides of the arm assembly, thereby joining the head assembly to the arm assembly.

In some embodiments, as described above with reference to Figures 1a to 5, the method 600 may comprise riveting the two folded sides of the arm assembly together. In some embodiments, the method 600 may comprise providing a stiffening sleeve within the body portion of the head assembly, inserting a bolt through the body portion and the stiffening sleeve and fixing the bolt with a locking nut, such as a nylon insert nut.

The method 600 described with reference to Figure 6 provides a structure that is lighter than existing conventional arm assemblies, while maintaining or improving the strength of the arm assembly.

Whilst the present invention has been described and illustrated with reference to particular embodiments, it will be appreciated by those of ordinary skill in the art that the invention lends itself to many different variations not specifically illustrated herein. For example, although the embodiments disclosed above are described in the context of a road-going vehicle, in other examples, the vehicle may be a rail truck, aircraft, ship, or any other type of vehicle capable of transporting goods. The term 'goods' is used herein to describe anything that may be transported in such a vehicle. Although it is envisaged that such goods are loaded in the vehicle and then unloaded at the vehicle's destination, it is also envisaged that the goods may be permanently, or semi-permanently, stored in the vehicle. For example, the goods may be equipment used to operate the vehicle, or equipment used within the vehicle.

Furthermore, whilst the present invention has been described with reference to one arrangement of head assembly, it will be understood that other (existing) head assemblies may be coupled to the arm assembly while maintaining the benefits of the invention and within the scope of the appended claims.

Where in the foregoing description, integers or elements are mentioned which have known, obvious or foreseeable equivalents, then such equivalents are herein incorporated as if individually set forth. Reference should be made to the claims for determining the true scope of the present invention. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An apparatus (100) for coupling a beam to a rail along which the apparatus can move, the apparatus comprising:
an arm assembly (102) having a first end arranged to interface with said beam and a second end opposite the first end; and
a head assembly (104), rotatably coupled to the second end of the arm assembly, arranged to engage said rail to inhibit movement of the head assembly (104) along the rail, **characterised in that** the arm assembly (102) comprises a first part (202a) and a second part (202b), the first part (202a) and the second part (202b) being coupled together to form a box section, the first part (202a) and second part (202b) being identical in profile and arranged in opposite orientation to enable the first and second parts to be coupled together.

2. An apparatus according to claim 1, wherein the first part (202a) and the second part (202b) are coupled together by one or more mechanical fasteners (208)

3. An apparatus according to claim 2, wherein the one or more mechanical fasteners (208) comprise one or more of: rivets; bolts; nuts; and screws.

4. An apparatus according to claim 1, wherein the first part (202a) and the second part (202b) are coupled together by one or more of: a weld joint; a solder joint; and an adhesive joint.

5. An apparatus according to any preceding claim, wherein the first part (202a) and the second part (202b) each comprise a metal material.

6. An apparatus according to claim 5, wherein the metal comprises steel and/or aluminium.

7. An apparatus according to any preceding claim, wherein the first part (202a) and the second part (202b) comprise overlapping portions to facilitate coupling together.

8. An apparatus according to any preceding claim, wherein the box section comprises an engagement element (220) arranged to allow adjustable and secure engagement with said beam.

9. An apparatus according to claim 8, wherein the engagement element comprises an aperture or slot (220) in at least one wall of the box section, through which a mechanical fastener (404) may secure the box section to a corresponding element on the said beam.

10. An apparatus according to any preceding claim, wherein the head assembly (104) comprises a body portion (302) and a trigger mechanism (316) housed within the body portion (302).

11. An apparatus according to claim 10, wherein the trigger mechanism (316) comprising:
an actuator (322) for operating the trigger mechanism;
a protrusion (324) for engaging a receiver in said rail;
a pivot pin (330) for attaching the trigger mechanism to the body portion; and
a spring (320), wherein the trigger mechanism is rotatable about the pivot pin (330) and, in use, the spring (320) urges against the trigger mechanism (316) to engage the protrusion (322) with a said receiver.

12. An apparatus according to claim 11, wherein the spring (320) is a double torsion spring.

13. A method of manufacturing an apparatus (100) for coupling a beam to a rail along which the apparatus can move, the apparatus comprising a head assembly (104) and an arm assembly (102), the method comprising:
performing a first sheet bending process (602) to form a body portion (302) of the head assembly (104);
performing a second sheet bending process (604) to form a first part and a second part (202a, 202b) of the arm assembly (102), the first and second parts being identical in profile, arranging the first part (202a) and second part (202b) in opposite orientations and fixing the first and second parts together;
providing (606) a trigger mechanism (316) within the body portion (302) of the head assembly (104); and
inserting (608) a pivot pin (330) through the body portion (302), the trigger mechanism (316)and the first and second parts (202a, 202b) of the arm assembly (102), thereby joining the head assembly (104) to the arm assembly (102).

## Patentansprüche

1. Vorrichtung (100) zum Koppeln eines Trägers an eine Schiene, entlang derer sich die Vorrichtung bewegen kann, mit:
einer Armbaugruppe (102) mit einem ersten Ende, das so angeordnet ist, dass es an den Träger anschließt, und einem zweiten Ende entgegengesetzt zu dem ersten Ende; und
einer Kopfbaugruppe (104), die drehbar an das zweite Ende der Armbaugruppe gekoppelt ist, die so angeordnet ist, dass sie mit der Schiene zum Verhindern einer Bewegung der Kopfbaugruppe (104) entlang der Schiene in Eingriff kommt, **dadurch gekennzeichnet, dass** die Armbaugruppe (102) einen ersten Teil (202a) und einen zweiten Teil (202b) aufweist, welcher erste Teil (202a) und welcher zweite Teil (202b) zum Ausbilden eines Boxabschnitts aneinander gekoppelt sind, welcher erste Teil (202a) und welcher zweite Teil (202b) hinsichtlich Profil identisch und in entgegengesetzter Orientierung angeordnet sind, so dass ermöglicht wird, dass der erste und der zweite Teil aneinander gekoppelt werden.

2. Vorrichtung nach Anspruch 1, bei der der erste Teil (202a) und der zweite Teil (202b) durch ein oder mehrere mechanische Befestigungsmittel (208) aneinander gekoppelt sind

3. Vorrichtung nach Anspruch 2, bei der das eine oder die mehreren mechanischen Befestigungsmittel (208) eines oder mehrere von: Niete; Bolzen; Muttern; und Schrauben umfassen.

4. Vorrichtung nach Anspruch 1, bei der der erste Teil (202a) und der zweite Teil (202b) durch eines oder mehrere von: einem Schweißpunkt; einem Lötpunkt; und einem Klebepunkt aneinander gekoppelt sind.

5. Vorrichtung nach einem vorhergehenden Anspruch, bei der der erste Teil (202a) und der zweite Teil (202b) jeweils ein Metallmaterial aufweisen.

6. Vorrichtung nach Anspruch 5, bei der das Metall Stahl und/oder Aluminium umfasst.

7. Vorrichtung nach einem vorhergehenden Anspruch, bei der der erste Teil (202a) und der zweite Teil (202b) überlappende Abschnitte zum Erleichtern eines Aneinanderkoppelns aufweisen.

8. Vorrichtung nach einem vorhergehenden Anspruch, bei der der Boxabschnitt ein Eingriffselement (220) aufweist, das so angeordnet ist, dass es einen einstellbaren und sicheren Eingriff mit dem Träger zulässt.

9. Vorrichtung nach Anspruch 8, bei der das Eingriffselement eine Öffnung oder einen Schlitz (220) in mindestens einer Wand des Boxabschnitts aufweist, durch die/den ein mechanisches Befestigungsmittel (404) den Boxabschnitt an einem entsprechenden Element an dem Träger befestigen kann.

10. Vorrichtung nach einem vorhergehenden Anspruch, bei der die Kopfbaugruppe (104) einen Körperabschnitt (302) und einen Auslösemechanismus (316), der innerhalb des Körperabschnitts (302) untergebracht ist, aufweist.

11. Vorrichtung nach Anspruch 10, bei der der Auslösemechanismus (316) aufweist:
einen Auslöser (322) zum Betätigen des Auslösemechanismus;
einen Vorsprung (324) zum Ineingriffbringen einer Aufnahme in der Schiene;
einen Drehzapfen (330) zum Anbringen des Auslösemechanismus an dem Körperabschnitt; und
eine Feder (320), bei der der Auslösemechanismus um den Drehzapfen (330) drehbar ist und, in Verwendung, die Feder (320) gegen den Auslösemechanismus (316) drückt, so dass der Vorsprung (322) mit der Aufnahme in Eingriff gebracht wird.

12. Vorrichtung nach Anspruch 11, bei der die Feder (320) eine doppelte Torsionsfeder ist.

13. Verfahren zum Herstellen einer Vorrichtung (100) zum Koppeln eines Trägers an eine Schiene, entlang derer sich die Vorrichtung bewegen kann, welche Vorrichtung eine Kopfbaugruppe (104) und eine Armbaugruppe (102) aufweist, mit:
Durchführen eines ersten Blechbiegeprozesses (602) zum Ausbilden eines Körperabschnitts (302) der Kopfbaugruppe (104);
Durchführen eines zweiten Blechbiegeprozesses (604) zum Ausbilden eines ersten Teils und eines zweiten Teils (202a, 202b) der Armbaugruppe (102), welcher erste und welcher zweite Teil hinsichtlich Profil identisch sind, Anordnen des ersten Teils (202a) und des zweiten Teils (202b) in entgegengesetzten Orientierungen und Befestigen des ersten und des zweiten Teils aneinander;
Vorsehen (606) eines Auslösemechanismus (316) innerhalb des Körperabschnitts (302) der Kopfbaugruppe (104); und
Einbringen (608) eines Drehzapfens (330) durch den Körperabschnitt (302), den Auslösemechanismus (316) und den ersten und den zweiten Teil (202a, 202b) der Armbaugruppe (102), so dass dadurch die Kopfbaugruppe (104) mit der Armbaugruppe (102) verbunden wird.

## Revendications

1. Appareil (100) pour coupler une poutre à un rail le long duquel l'appareil peut se déplacer, l'appareil comprenant :
un ensemble de bras (102) présentant une première extrémité agencée pour interfacer avec ladite poutre et une seconde extrémité opposée à la première extrémité ; et
un ensemble de tête (104), couplé de manière rotative à la seconde extrémité de l'ensemble de bras, agencé pour venir en prise avec ledit rail afin d'empêcher un déplacement de l'ensemble de tête (104) le long du rail, **caractérisé en ce que** l'ensemble de bras (102) comprend une première partie (202a) et une seconde partie (202b), la première partie (202a) et la seconde partie (202b) étant couplées ensemble pour former une section de boîte, la première partie (202a) et la seconde partie (202b) présentant un profil identique et étant agencées dans une orientation opposée pour permettre aux première et seconde parties d'être couplées ensemble.

2. Appareil selon la revendication 1, dans lequel la première partie (202a) et la seconde partie (202b) sont couplées ensemble par une ou plusieurs fixations mécaniques (208)

3. Appareil selon la revendication 2, dans lequel les une ou plusieurs fixations mécaniques (208) comprennent un ou plusieurs parmi : des rivets ; des boulons ; des écrous ; et des vis.

4. Appareil selon la revendication 1, dans lequel la première partie (202a) et la seconde partie (202b) sont couplées ensemble par un ou plusieurs parmi : un joint soudé ; un joint de brasure ; et un joint adhésif.

5. Appareil selon l'une quelconque des revendications précédentes, dans lequel la première partie (202a) et la seconde partie (202b) comprennent chacune un matériau métallique.

6. Appareil selon la revendication 5, dans lequel le métal comprend de l'acier et/ou de l'aluminium.

7. Appareil selon l'une quelconque des revendications précédentes, dans lequel la première partie (202a) et la seconde partie (202b) comprennent des parties se chevauchant pour faciliter leur couplage.

8. Appareil selon l'une quelconque des revendications précédentes, dans lequel la section de boîte comprend un élément de mise en prise (220) agencé pour permettre une mise en prise ajustable et sûre avec ladite poutre.

9. Appareil selon la revendication 8, dans lequel l'élément de mise en prise comprend une ouverture ou une fente (220) dans au moins une paroi de la section de boîte, à travers laquelle une fixation mécanique (404) peut fixer la section de boîte à un élément correspondant sur ladite poutre.

10. Appareil selon l'une quelconque des revendications précédentes, dans lequel l'ensemble de tête (104) comprend une partie de corps (302) et un mécanisme de déclenchement (316) logé à l'intérieur de la partie de corps (302).

11. Appareil selon la revendication 10, dans lequel le mécanisme de déclenchement (316) comprend :
un actionneur (322) pour faire fonctionner le mécanisme de déclenchement ;
une saillie (324) destinée à venir en prise avec un récepteur dans ledit rail ;
une broche de pivotement (330) pour fixer le mécanisme de déclenchement à la partie de corps ; et
un ressort (320), dans lequel le mécanisme de déclenchement peut tourner autour de la branche de pivotement (330) et, en utilisation, le ressort (320) pousse contre le mécanisme de déclenchement (316) pour mettre en prise la saillie (322) avec ledit récepteur.

12. Appareil selon la revendication 11, dans lequel le ressort (320) est un ressort à double torsion.

13. Procédé de fabrication d'un appareil (100) pour coupler une poutre à un rail le long duquel l'appareil peut se déplacer, l'appareil comprenant un ensemble de tête (104) et un ensemble de bras (102), le procédé comprenant les étapes consistant à :
effectuer un premier processus de pliage de feuille (602) pour former une partie de corps (302) de l'ensemble de tête (104) ;
effectuer un second processus de pliage de feuille (604) pour former une première partie et une seconde partie (202a, 202b) de l'ensemble de bras (102), les première et seconde parties présentant un profil identique, agencer la première partie (202a) et la seconde partie (202b) dans des orientations opposées et fixer les première et seconde parties ensemble ;
fournir (606) un mécanisme de déclenchement (316) à l'intérieur de la partie de corps (302) de l'ensemble de tête (104) ; et
insérer (608) une broche de pivotement (330) à travers la partie de corps (302), le mécanisme de déclenchement (316) et les première et seconde parties (202a, 202b) de l'ensemble de bras (102), en joignant ainsi l'ensemble de tête (104) à l'ensemble de bras (102).
